# EUROPÄISCHE PATENTANMELDUNG

(11) **EP 4 813 343 A1**
(43) Veröffentlichungstag der Anmeldung: **30.09.2026**
(21) Anmeldenummer: 25165547.8
(22) Anmeldetag: 24.03.2025
(51) Int. Cl.: A61C 1/00

(54) **EINRICHTUNG ZUR WASSERVERSORGUNG EINES MEDIZINISCHEN ARBEITSPLATZES**

(71) Anmelder: KaVo Dental GmbH, 88400 Biberach an der Riss (DE)
(72) Erfinder: MÖßLANG, Hubert, 89610 Oberdischingen (DE); GAPP, Wolfgang, 88410 Bad Wurzach (DE); WEBER, Markus, 88433 Schlemmerhofen (DE); JEGGLE, Christoph, 88441 Mittelbiberach (DE); SCHMIDBERGER, Manuel, 88400 Biberach (DE)
(74) Vertreter: Thun, Clemens

(57) **Zusammenfassung**

Eine Einrichtung zur Wasserversorgung eines medizinischen, insbesondere eines zahnmedizinischen Arbeitsplatzes (100)w weist einen Mischbehälter (T1) zum Bereitstellen einer Flüssigkeit auf, die Entnahmestellen (51, 52) des medizinischen Arbeitsplatzes (100) zugeführt wird, wobei die Flüssigkeit durch Mischen von Wasser mit einem Pflege- oder Entkeimungsmittel erhalten wird. Der Mischbehälter (T1) weist einen ersten Anschluss (11) für eine Wasserzuführung sowie einen zweiten Anschluss (12) für die Zuführung des Pflege- oder Entkeimungsmittels aufweist, wobei beide Anschlüsse (11, 12) an einer Oberseite des Mischbehälters (T1) angeordnet und über eine Freifallstrecke (H) von einem zum Mischen des Wassers mit dem Pflege- oder Entkeimungsmittel vorgesehenen Mischbereich (M) des Mischbehälters (T1) getrennt sind. Zusätzlich ist weiterer Anschluss (13) für eine alternative Wasserzuführung vorgesehen, wobei der weitere Anschluss (13) ebenfalls über die Freifallstrecke (H) von dem Mischbereich (M) getrennt ist.

## Beschreibung

Die vorliegende Erfindung betrifft eine Einrichtung, die zur Wasserversorgung eines medizinischen, insbesondere eines zahnmedizinischen Arbeitsplatzes vorgesehen ist.

An zahnmedizinischen Arbeitsplätzen kommen verschiedene Flüssigkeiten zum Einsatz, mit deren Hilfe Untersuchungen bzw. Behandlungen unterstützt und/oder Reinigungsmaßnahmen durchgeführt werden. Diese Flüssigkeiten werden unterschiedlichen sogenannten Entnahmestellen des Arbeitsplatzes zugeführt, wobei je nach Art der Entnahmestelle unterschiedliche Anforderungen an die zugeführte Flüssigkeit bestehen. Aus hygienischen Gründen ist es in vielen Fällen erforderlich, die zugeführte Flüssigkeit keimfrei zu halten.

Grundbestandteil der meisten verwendeten Flüssigkeiten ist Trinkwasser, welches allerdings in der Regel nur dann unmittelbar einer Entnahmestelle zugeführt wird, wenn es dort zu Reinigungszwecken eingesetzt wird. Im Hinblick auf einen zahnärztlichen Arbeitsplatz ist hier insbesondere das sogenannte Speibecken bzw. die Speischale zu nennen, die üblicherweise mit Trinkwasser gespült wird. Auf der anderen Seite sind zahnmedizinische Untersuchungs- oder Behandlungsinstrumente häufig so ausgestaltet, dass sie mithilfe von Wasser die Behandlungsstelle kühlen oder reinigen. In diesem Fall kommt jedoch das Trinkwasser nicht unmittelbar zum Einsatz, sondern wird mit einer geringen Menge eines geeigneten Entkeimungsmittels versetzt. Auch das dem Patienten oftmals zum Spülen des Mundraums bereitgestellte Wasser wird mit einer entsprechenden Menge eines Entkeimungsmittels vermischt.

Je nach Anwendungsfall muss also das durch die Einrichtung zur Wasserversorgung bereitgestellte Wasser mit zusätzlichen Flüssigkeiten vermischt werden. Zahnärztliche Arbeitsplätze weisen zu diesem Zweck üblicherweise einen entsprechenden Mischbehälter auf, in den einerseits das von der Trinkwasserversorgung bereitgestellte Wasser und andererseits das Entkeimungsmittel eingeleitet werden. Die resultierende Mischung wird dann gegebenenfalls über zwischengeschaltete Vorratsbehälter den Entnahmestellen zugeführt. Eine entsprechende Einrichtung zur Wasserversorgung ist beispielsweise aus der EP 0 524 334 B2 bekannt. Ferner beschreibt die DE 10 2004 058 240 A1 ein Fluid -Center für eine Dentaleinheit mit zwei Zuläufen, einem für die Wasserversorgung und einem für die Zufuhr eines Entkeimungsmittels, und in der JP7547144 wird die hydrostatische Befüllung eines Fluidreservoirs einer Dentaleinheit offenbart.

Die technischen Regeln für Trinkwasserinstallationen schreiben zum Schutz des Trinkwassers vor, dass die dem Mischbehälter zugeführten Flüssigkeiten, insbesondere das Trinkwasser, über eine sogenannte Freifallstrecke in den Mischbehälter eingeleitet werden. Hierdurch wird verhindert, dass in dem Fluidsystem des zahnärztlichen Arbeitsplatzes gegebenenfalls vorhandene Keime das allgemeine Trinkwasser befallen können, sodass dieses geschützt bleibt. Auch dies ist in der bereits erwähnten EP 0 524 334 B2 beschrieben.

Zahnärztliche Behandlungsplätze, die - wie oben beschrieben - mit dem Trinkwassernetz verbunden sind, weisen hierbei den Nachteil auf, dass bei einer Verunreinigung des Trinkwassers oder einem Ausfall der Trinkwasserversorgung das automatisierte Bereitstellen eines entsprechend mit Entkeimungsmittel versetzten Wassers nicht möglich ist. In solchen Fällen können die Behandlungseinheiten erst nach längerer Unterbrechung wieder betrieben werden, wobei als Übergangslösung bekannt ist, im Falle eines vorübergehenden Ausfalls der Trinkwasserversorgung einen Notlaufbetrieb durchzuführen, bei dem über den Behälter des Entkeimungsmittels die gesamte Wasserversorgung erfolgt. Hierzu muss das benötigte Wasser manuell mit Entkeimungsmittel versetzt und in den Entkeimungsmittelbehälter gefüllt werden. Ein kontinuierlicher, automatischer Betrieb mit geeigneter Zudosierung des Entkeimungsmittels ist in diesem Fall nicht gewährleistet, und es besteht die Gefahr, dass die Konzentration des Entkeimungsmittels in dem letztendlich genutzten Wasser nicht den gewünschten Anforderungen entspricht.

Der vorliegenden Erfindung liegt deshalb die Aufgabenstellung zugrunde, eine Möglichkeit bereitzustellen, mit deren Hilfe auch im Falle eines vorübergehenden Ausfalls der allgemeinen Trinkwasserversorgung einem medizinischen Arbeitsplatz in geeigneter Weise aufbereitete Flüssigkeiten zur Verfügung gestellt werden können.

Die Aufgabe wird durch eine Einrichtung zur Wasserversorgung eines medizinischen, insbesondere eines zahnmedizinischen Arbeitsplatzes mit den Merkmalen des Anspruchs 1 gelöst. Vorteilhafte Weiterbildungen der Erfindung sind Gegenstand der abhängigen Ansprüche.

Die erfindungsgemäße Lösung sieht vor, mithilfe eines zusätzlichen, separaten Wasseranschlusses sowie einer geeigneten Steuerung über ein modulares Ventilsystem im Falle eines Ausfalls der allgemeinen Trinkwasserversorgung weiterhin Wasser kontrolliert, in ausreichender Qualität und autark von der Trinkwasserversorgung dem Mischbehälter zur Verfügung zu stellen. Dieses im Notfallbetrieb genutzte Wasser kann beispielsweise durch ein entsprechendes separates Notfall-Reservoir bzw. einen entsprechenden Behälter bereitgestellt werden und mittels hydrostatischem Druck zur Verfügung stehen, wobei das Entkeimungsmittel in herkömmlicher Weise diesem alternativ genutzten Wasser zugemischt werden kann. Ein manuelles Mischen ist in diesem Fall nicht mehr erforderlich. Stattdessen kann im Bedarfsfall automatisch eine Umschaltung der Wasserzufuhr von der allgemeinen Trinkwasserversorgung zu dem alternativen Reservoir erfolgen, wobei weiterhin zuverlässig und in gewohnter Weise die automatische Zudosierung des Entkeimungsmittels erfolgt.

Gemäß der vorliegenden Erfindung wird also eine Einrichtung zur Wasserversorgung eines medizinischen, insbesondere eines zahnmedizinischen Arbeitsplatzes vorgeschlagen, welche einen Mischbehälter zum Bereitstellen einer Flüssigkeit aufweist, die Entnahmestellen des medizinischen Arbeitsplatzes zugeführt wird,
- wobei die Flüssigkeit durch Mischen von Wasser mit einem Pflege- oder Entkeimungsmittel bereitgestellt wird,
- wobei der Mischbehälter einen ersten Anschluss für eine Wasserzufuhr sowie einen zweiten Anschluss für die Zuführung des Pflege- oder Entkeimungsmittel aufweist, die beide an einer Oberseite des Mischbehälters angeordnet und über eine Freifallstrecke von einem zum Mischen vorgesehenen Mischbereich des Mischbehälters getrennt sind, und
- wobei erfindungsgemäß der Mischbehälter zusätzlich einen weiteren Anschluss für eine alternative Wasserzufuhr aufweist, der ebenfalls über die Freifallstrecke von dem Mischbereich getrennt ist.

Im Rahmen der erfindungsgemäßen Lösung kann also bequem zwischen einer allgemeinen Trinkwasserversorgung und einer autarken Wasserversorgung gewählt werden, ohne auf die automatische Zuführung des Pflege- oder Entkeimungsmittels verzichten zu müssen. Dennoch werden sämtliche hygienischen Vorschriften hinsichtlich des Trinkwasserschutzes eingehalten, da - wie oben erläutert - auch im Falle der Zuführung aus der autarken Vorratsquelle die Freifallstrecke genutzt wird. Letztendlich kann somit auch bei Ausfall oder anderen Problemen der Trinkwasserversorgung ein kontinuierlicher Betrieb des medizinischen Arbeitsplatzes aufrechterhalten werden.

Vorzugsweise ist vorgesehen, dass der erste Anschluss für die Wasserzuführung mit einem Festwasseranschluss verbunden ist. Für die alternative Wasserversorgung ist dann vorzugsweise ein separater Wasservorratsbehälter vorgesehen, der mit dem weiteren Anschluss für die alternative Wasserzuführung verbunden ist. Dieser Wasservorratsbehälter ist dabei bevorzugt oberhalb des zugehörigen weiteren Anschlusses angeordnet, sodass durch den resultierenden hydrostatischen Druck in einfacher Weise Wasser dem Mischbehälter zugeführt werden kann.

Weiterhin ist bevorzugt vorgesehen, dass den drei Anschlüssen jeweils ein steuerbares Ventil vorgeschaltet ist, über welches die Zuflussmenge der jeweiligen Flüssigkeit in den Mischbehälter gesteuert werden kann. Hierbei können insbesondere Steuerungsmittel für die Ventile vorgesehen sein, die derart ausgebildet sind, dass
a) im Bedarfsfall die Einleitung von Wasser in den Mischbehälter entweder über den ersten Anschluss für die Wasserzuführung oder über den weiteren Anschluss für die alternative Wasserzuführung freigegeben wird, und
b) im Falle des Einleitens Wasser (unabhängig von der Quelle) zusätzlich auch das Pflege- oder Entkeimungsmittel eingeleitet wird.

Die Menge des eingeleiteten Pflege- oder Entkeimungsmittels kann dabei über die Steuerungsmittel sowohl bei Einleitung von Wasser über den ersten Anschluss als auch bei Einleitung von Wasser über den weiteren Anschluss dosierbar sein. Insbesondere kann diese Menge und damit die resultierende Konzentration von einem Betriebszustand des medizinischen Arbeitsplatzes abhängig sein.

Vorzugsweise ist weiterhin vorgesehen, dass dem Mischbehälter ein Vorratsbehälter nachgeschaltet ist, in den die durch den Mischbehälter bereitgestellte Flüssigkeit eingeleitet wird. Zwischen dem Mischbehälter und dem Vorratsbehälter ist vorzugsweise wiederum ein steuerbares Ventil angeordnet. Insbesondere kann dem Vorratsbehälter ein weiterer, zweiter Vorratsbehälter nachgeordnet sein, der durch den ersten Vorratsbehälter gespeist wird und über den die Versorgung der verschiedenen Entnahmestellen erfolgt, welche das mit dem Pflege- oder Entkeimungsmittel versetzte Wasser benötigen. Dieser weitere Vorratsbehälter dient letztlich als Reservoir für das bereits mit dem Entkeimungsmittel aufbereitete Wasser, welches dann den verschiedenen Entnahmestellen des Arbeitsplatzes zur Verfügung gestellt wird.

Wie bereits erwähnt, existieren an einem zahnärztlichen Arbeitsplatz oftmals auch weitere Entnahmestellen, bei denen die Verwendung von mit Entkeimungsmittel aufbereitetem Wasser nicht erforderlich ist, sondern ausschließlich reguläres Trinkwasser benötigt wird. Hierfür kann gemäß einer bevorzugten Ausführungsform der Erfindung vorgesehen sein, dass das dem ersten Anschluss zugeführte Wasser, welches von der allgemeinen Trinkwasserversorgung stammt, zusätzlich getrennt vom Mischbehälter auch solchen weiteren Entnahmestellen des medizinischen Arbeitsplatzes zugeführt werden kann. Diese weiteren Entnahmestellen weisen vorzugsweise ebenfalls jeweils eine Freifallstrecke für die Wasserentnahme auf, sodass auch hier eine Entkopplung vom allgemeinen Trinkwassernetz erreicht wird. Den verschiedenen Entnahmestellen ist vorzugsweise jeweils ein steuerbares Ventil vorgeschaltet, über welches die Entnahme der zur Verfügung gestellten Flüssigkeit für den jeweiligen Verbraucher individuell gesteuert wird.

Hinsichtlich der zum Einsatz kommenden verschiedenen Ventile, mit denen die Ein- oder Durchleitung der verschiedenen Flüssigkeiten gesteuert wird, ist vorzugsweise vorgesehen, dass wenigstens eines der steuerbaren Ventile als modulares Ventil ausgebildet ist, so dass zwei zu einander benachbarte Ventile derart miteinander koppelbar sind, dass die dem ersten Ventil zugeführte Flüssigkeit (also z.B. Wasser) auch zu dem mit ihm gekoppelten weiteren Ventil abgezweigt wird.

Zentraler Bestandteil der zur Wasserversorgung des medizinischen Arbeitsplatzes genutzten Komponenten ist der bereits erwähnte Mischbehälter, in dem das Wasser mit dem Pflege- oder Entkeimungsmittel in geeigneter Weise vermischt wird. Derartige Mischbehälter weisen oftmals einen Überlauf auf, mit dessen Hilfe die Einhaltung der vorgeschriebenen Freifallstrecke für die zugeführten Flüssigkeiten gewährleistet ist. Die in dem Mischbehälter gemischte Flüssigkeit kann also nur bis zum Niveau dieses Überlaufs ansteigen.

In diesem Fall ergibt sich jedoch das Problem, dass zwar bis zu diesem Niveau mithilfe des Pflege- oder Entkeimungsmittels eine Reinigung des Mischbehälters erfolgen kann, die sich oberhalb dieses Niveaus befindlichen Innenwände des Mischbehälters jedoch systembedingt nicht mit dem Reinigungsmittel in Kontakt kommen. Hier besteht eine erhöhte Gefahr der Ablagerung von Bakterien, Pilzen oder anderen Verunreinigungen, was als nachteilig angesehen wird.

Gemäß einem zweiten erfindungsgemäßen Aspekt ist deshalb vorgesehen, dass der Mischbehälter ein den Mischbereich bildendes Gehäuseunterteil sowie ein den Mischbehälter schließendes Gehäuseoberteil aufweist, das die Anschlüsse für die Wasserzuführung(en) sowie das Pflege- oder Entkeimungsmittel aufnimmt. Dabei ist vorgesehen, dass das Gehäuseoberteil vom Gehäuseunterteil separierbar ist, um eine getrennte Reinigung oder einen Austausch des Gehäuseoberteils zu ermöglichen. Hierdurch besteht die Möglichkeit, die von einem mikrobiellen Befall gefährdeten Oberflächen des Mischbehälters einfach auszutauschen oder aus dem System zu entnehmen und separat komfortabel zu reinigen. Die bei den üblicherweise einteilig ausgeführten Mischbehältern auftretenden hygienischen Probleme werden somit vermieden, was es letztendlich erlaubt, in vergleichsweise einfacher Weise die geltenden Hygienevorschriften einzuhalten.

In diesem Zusammenhang ist darauf hinzuweisen, dass der Gedanke der zweiteiligen Ausgestaltung des Mischbehälters auch unabhängig von der zuvor beschriebenen ergänzenden autarken Wasserversorgung verwirklicht werden kann. Entsprechend einem zweiten erfindungsgemäßen Gedanken wird daher eine Einrichtung zur Wasserversorgung eines medizinischen, insbesondere eines zahnmedizinischen Arbeitsplatzes vorgeschlagen, die einen Mischbehälter zum Bereitstellen einer Flüssigkeit aufweist, welche den Entnahmestellen zugeführt wird,
- wobei die Flüssigkeit wird durch Mischen von Wasser mit einem Pflege- oder Entkeimungsmittel bereitgestellt wird,
- wobei der Mischbehälter einen ersten Anschluss für eine Wasserzufuhr sowie einen zweiten Anschluss für das Pflege- oder Entkeimungsmittel aufweist und beide Anschlüsse an einer Oberseite des Mischbehälters angeordnet und über eine Freifallstrecke vom Mischbereich des Mischbehälters getrennt sind, und
- wobei erfindungsgemäß der Mischbehälter aus einem Gehäuseunterteil, das den Mischbereich bildet, sowie einem Gehäuseoberteil besteht, das die genannten Anschlüsse trägt, und wobei das Gehäuseoberteil von dem Gehäuseunterteil separierbar ist, um eine getrennte Reinigung oder einen Austausch des Gehäuseoberteils zu ermöglichen.

Vorzugsweise erstreckt sich das Gehäuseoberteil derart weit nach unten, dass der gesamte Innenwandbereich oberhalb des Mischbereichs ausschließlich vom Gehäuseoberteil gebildet wird. Damit ist sichergestellt, dass tatsächlich alle nicht vom Reinigungsmittel erreichbaren Innenflächen im Bedarfsfall entfernt und separat gereinigt werden können. Um gleichzeitig ein zuverlässiges Verschließen des Mischbehälters sicherzustellen, ist weiterhin vorgesehen, dass das Gehäuseunterteil oberhalb des Mischbereichs das Gehäuseoberteil außenseitig umgreift. Die sich oberhalb des Mischbereichs befindenden Wandbereiche des Gehäuseunterteils stellen somit keine Innenwände des Mischbehälters dar, für die das erläuterte Hygienerisiko relevant wäre.

Insgesamt wird durch die beiden erfindungsgemäßen Lösungsansätze das Einhalten der hygienischen Vorschriften hinsichtlich der an medizinischen Arbeitsplätzen verwendeten Flüssigkeiten weiter verbessert, wobei auch im Falle eines Ausfalls der allgemeinen Trinkwasserversorgung ein kontinuierlicher Betrieb gewährleistet ist. Dementsprechend wird gemäß der vorliegenden Erfindung auch ein medizinischer, insbesondere ein zahnmedizinischer Arbeitsplatz mit einer derart ausgestalteten Einrichtung zur Wasserversorgung vorgeschlagen.

Nachfolgend soll die Erfindung anhand der beiliegenden Zeichnung näher erläutert werden. Es zeigen:
- Figur 1: eine schematische Ansicht eines zahnmedizinischen Arbeitsplatzes mit einer erfindungsgemäßen Einrichtung zur Wasserversorgung;
- Figur 2: eine schematische Darstellung der Zuführung, Mischung und Weiterleitung der genutzten Flüssigkeiten zu den verschiedenen Entnahmestellen;
- Figur 3: einen Normalbetrieb der Einrichtung mit Wasser aus der allgemeinen Trinkwasserversorgung;
- Figur 4: einen Notbetrieb mit Nutzung der ergänzenden bzw. autarken Wasserversorgung;
- Figur 5: den Zustand der erfindungsgemäßen Einrichtung bei maximalem Füllstand des ersten Vorratsbehälters mit unterbrochener Flüssigkeitszufuhr;
- Figur 6: eine schematische Darstellung des zweiten erfindungsgemäßen Gedankens der zweiteiligen Ausgestaltung des Mischbehälters; und
- Figur 7: eine vergrößerte Ansicht des in Figur 6 gezeigten Mischbehälters.

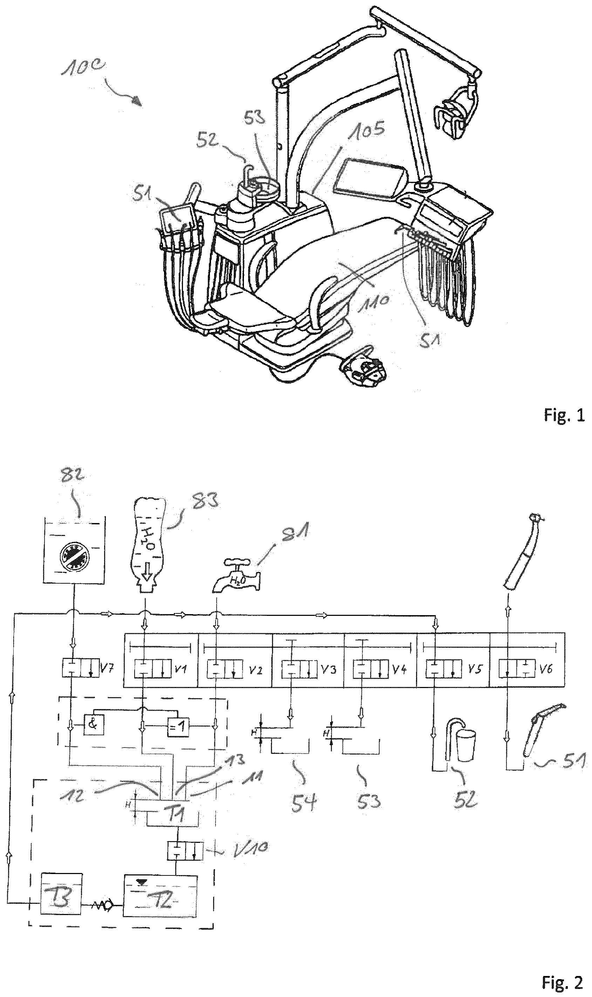

Figur 1 zeigt als bevorzugtes Anwendungsbeispiel der vorliegenden Erfindung einen mit dem Bezugszeichen 100 versehenen zahnmedizinischen Behandlungsplatz. Selbstverständlich ist die Erfindung auch auf andere medizinische Arbeitsplätze anwendbar, bei denen entsprechend hygienisch aufbereitete Flüssigkeiten verwendet werden und das Einhalten der Hygienevorschriften - insbesondere zum Schutz des allgemeinen Trinkwassers - erforderlich ist.

Zentraler Bestandteil des in Figur 1 dargestellten zahnmedizinischen Arbeitsplatzes ist der Patientenstuhl 110, auf dem der Patient während der Durchführung einer Untersuchung oder Behandlung ruht. Zu beiden Seiten des Patientenstuhls 110 sind Einheiten mit entsprechenden zahnärztlichen Untersuchungs- oder Behandlungsinstrumenten vorgesehen. Die Versorgung dieser Instrumente erfolgt über die Zentraleinheit 105 des Arbeitsplatzes 100, welche die Instrumente betreibt und mit den notwendigen Medien versorgt. Hierbei handelt es sich nicht nur um Medien zum Antrieb der Instrumente - also beispielsweise Strom oder Druckluft - sondern auch um unterstützende Medien wie Luft oder Wasser, mit deren Hilfe zu untersuchende oder zu behandelnde Stellen im Mundraum des Patienten gereinigt und/oder gekühlt werden können. Innerhalb der Einheit 105 sind somit die nachfolgend näher erläuterten erfindungsgemäßen Komponenten integriert, mit deren Hilfe eine Versorgung der verschiedenen Entnahmestellen des zahnmedizinischen Arbeitsplatzes 100 mit Wasser erfolgt.

Beispielhafte Entnahmestellen sind die bereits erwähnten, mit dem Bezugszeichen 51 versehenen Behandlungs- oder Untersuchungsinstrumente, bei denen es sich z.B. um zahnärztliche Bohrer, Scaler oder andere vergleichbare Instrumente handelt. Auch eine Abgabestelle 52 für Wasser, das dem Patienten beispielsweise zum Spülen des Mundraums zur Verfügung gestellt wird, stellt eine entsprechende Entnahmestelle dar. In beiden genannten Fällen ist aus hygienischen Gründen vorgesehen, dass das Wasser nicht unverändert abgegeben wird. Stattdessen wird diesem eine zumindest geringfügige Menge eines geeigneten Entkeimungsmittels zugeführt, um sicherzustellen, dass das über diese Entnahmestellen 51 und 52 abgegebene Wasser vollständig keimfrei ist.

Zusätzlich zu den bereits beschriebenen Entnahmestellen 51, 52 erfolgt an einem zahnmedizinischen Arbeitsplatz 100 auch die Abgabe von nicht aufbereitetem bzw. unbehandeltem Wasser, insbesondere dann, wenn dieses nicht in direkten Kontakt mit dem Patienten gelangt und ausschließlich zu Spül- oder Reinigungszwecken verwendet werden soll. Bei dem in Figur 1 dargestellten Arbeitsplatz 100 bildet beispielsweise das sogenannte Speibecken 53 eine derartige weitere Entnahmestelle. Zum Spülen dieses Beckens 53 wird in der Regel unmittelbar das dem Arbeitsplatz 100 zugeführte Waser verwendet. Auch die Reinigung der Schläuche, die zum Absaugen von Flüssigkeiten oder kleineren Schmutzpartikeln verwendet werden, erfolgt üblicherweise unmittelbar mit unbehandeltem Wasser.

Aus den obigen Erläuterungen ergibt sich, dass an einem medizinischen Arbeitsplatz verschiedenen Entnahmestellen Wasser zugeführt werden muss - teils mit, teils ohne Zusatz eines Entkeimungsmittels. Darüber hinaus müssen entsprechende Vorschriften eingehalten werden, um eine Verunreinigung des allgemeinen Trinkwassernetzes zu vermeiden. Die hierfür vorgesehenen Maßnahmen werden nachfolgend anhand der weiteren Figuren näher erläutert.

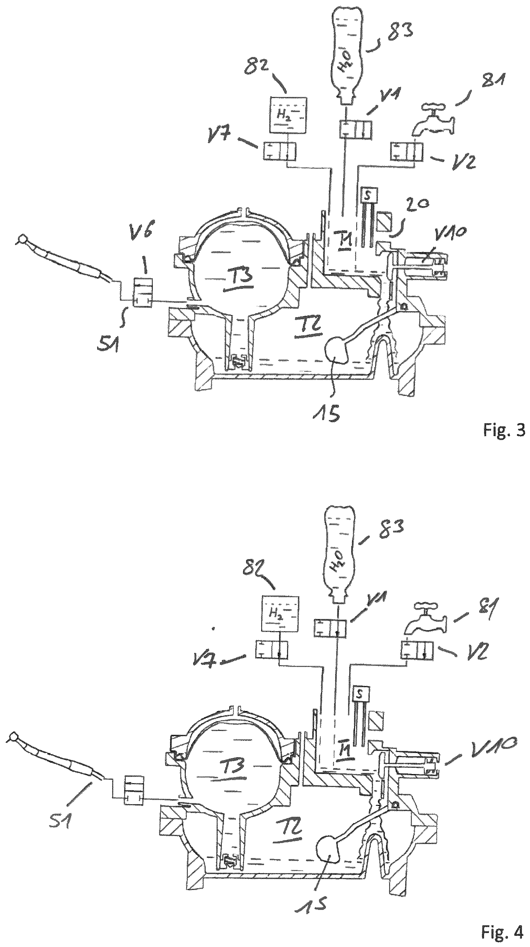

Figur 2 zeigt in diesem Zusammenhang schematisch den sogenannten Medienplan der erfindungsgemäßen Einrichtung zur Wasserversorgung, während die Figuren 3 bis 5 Schnittdarstellungen derjenigen Komponenten zeigen, die für die Bereitstellung des mit Entkeimungsmittel vermischten Wassers verantwortlich und in erfindungsgemäßer Weise ausgestaltet sind.

Für die Bereitstellung des mit Entkeimungsmittel versetzten Wassers ist in erster Linie der Mischbehälter T1 verantwortlich, in dem beide Flüssigkeiten in einem geeigneten Verhältnis miteinander vermischt werden, bevor die resultierende Flüssigkeit den Entnahmestellen 51, 52 zur Verfügung gestellt wird. Der Mischbehälter T1 ist - ebenso wie im Stand der Technik - mit einem ersten Anschluss 11 für das Trinkwasser sowie einem zweiten Anschluss 12 für das Entkeimungsmittel ausgestattet. Der erste Anschluss 11 ist an die allgemeine Trinkwasserversorgung 81 gekoppelt, während der zweite Anschluss 12 zu einem Vorratsbehälter 82 für das Entkeimungsmittel führt.

Mithilfe zweier Ventile V2 und V7 kann der Durchfluss der jeweiligen Flüssigkeit in den Mischbehälter T1 gesteuert werden. Diese Steuerung erfolgt üblicherweise automatisiert mithilfe entsprechender - in den Figuren nicht gezeigte - Steuerungsmittel, sodass die Konzentration des Entkeimungsmittels stets einem gewünschten Wert entspricht. Diese Konzentration kann dabei variabel sein und beispielsweise vom Betriebszustand des Behandlungsplatzes 100 abhängen. Beispielsweise ist während laufender Untersuchungen oder Behandlungen die Konzentration des Entkeimungsmittels im Wasser in der Regel relativ gering, wohingegen sie nach Abschluss der Arbeiten - zur Reinigung der verschiedenen Leitungen - gezielt erhöht wird. Auch dieser Vorgang kann im Wesentlichen automatisiert über die entsprechenden Steuerungsmittel erfolgen.

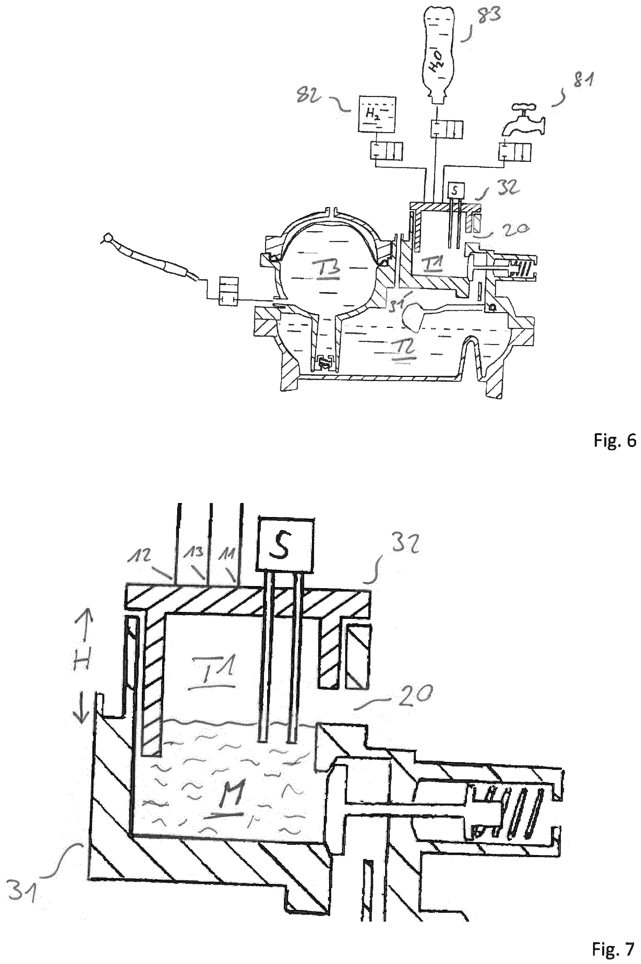

Ausgehend von dem Trinkwassernetz 81 und dem Vorratsbehälter für das Entkeimungsmittel 82 werden also das Wasser und das Entkeimungsmittel über die Ventile V2 und V7 in den Mischbehälter T1 eingeleitet. Entsprechend den hygienischen Vorschriften erfolgt dies über eine sog. Freifallstrecke, durch die eine Entkopplung zwischen der sich in dem Mischbehälter T1 befindenden Flüssigkeit und insbesondere der allgemeinen Trinkwasserversorgung 81 gewährleistet ist. Am oberen Bereich bzw. an der Oberseite des Mischbehälters T1, die entgegen der sich im Mischbehälter T1 befindenden Flüssigkeitsoberfläche gerichtet ist, sind hierfür die bereits erwähnten entsprechenden Anschlüsse bzw. Einlässe 11, 12 für die Flüssigkeiten vorgesehen, die knapp unterhalb der Oberseite bzw. unmittelbar an der Oberseite des Behälters T1 enden. Hierdurch fällt die jeweilige Flüssigkeit über eine gewisse Mindeststrecke H (siehe hierzu insbesondere die Darstellung in Figur 7) frei, also ohne Kontakt mit irgendwelchen Leitungen oder Rohren, in vertikaler Richtung in den Mischbehälter T1, wobei durch nachfolgend noch näher beschriebene Maßnahmen sichergestellt ist, dass die sich im Mischbehälter T1 ansammelnde Flüssigkeit nur bis zu einem gewissen Niveau steigen kann, insbesondere grundsätzlich in vertikaler Richtung den Mindestabstand H bis zum Einlass 11 für das Trinkwasser einhält. Etwaig im Mischbehälter T1 vorhandene Keime können somit aufgrund der resultierenden Leistungsunterbrechung nicht in das Trinkwassernetz 81 gelangen. Derartige Maßnahmen sind - wie bereits erläutert - aus dem Stand der Technik bereits bekannt und durch entsprechende Normen vorgeschrieben.

Das in dieser Weise aufbereitete, also mit dem Entkeimungsmittel versetzte Wasser wird anschließend über ein weiteres steuerbares Ventil V10 in einen ersten Vorratsbehälter T2 weitergeleitet und von dort einem weiteren Vorratsbehälter T3 zugeführt. Dieser zweite Vorratsbehälter T3 stellt das eigentliche Reservoir für das mit Entkeimungsmittel aufbereitete Wasser dar, welches dann den bereits genannten Entnahmestellen - also im dargestellten Beispiel den Anschlüssen für die medizinischen Instrumente 51 sowie dem Ausgaberohr 52 für das Mundspülwasser - zugeführt wird. Den jeweiligen Entnahmestellen sind geeignete Ventile V5 bzw. V6 vorgeschaltet, über die wahlweise eine Wasserabgabe erfolgen kann.

Der Vorratsbehälter T3 fungiert dabei als Sicherheitsreservoir, über das der Betrieb des medizinischen Arbeitsplatzes 100 aufrechterhalten werden kann, falls sich der erste Vorratsbehälter T2 vorübergehend leert. In einem solchen Fall kann der erste Vorratsbehälter T2 erneut befüllt werden, währenddessen die Versorgung der Entnahmestellen weiterhin über den zweiten Vorratsbehälter T3 sichergestellt bleibt.

Wie bereits erwähnt, kann das von der Trinkwasserversorgung bereitgestellte Wasser teilweise auch unmittelbar bestimmten Entnahmestellen zugeführt werden - in Figur 2 mit den Bezugszeichen 53 und 54 bezeichnet. In diesem Fall wird das Wasser alternativ zum Mischbehälter T1 direkt den Entnahmestellen 53 und 54 zugeleitet. Die Abgabe erfolgt über die Ventile V3 bzw. V4, wobei auch hier jeweils eine entsprechende Freifallstrecke H zum Einsatz kommt, um den Schutz des allgemeinen Trinkwassers zu gewährleisten.

Eine besonders vorteilhafte Ausgestaltung besteht dabei in der Umsetzung der in Figur 2 gezeigten verschiedenen Ventile V1 bis V7. Diese sind als sogenannte Modularventile ausgeführt und dabei sind so gestaltet, dass sie nicht nur einzeln steuerbar sind, sondern sich auch in Reihe schalten lassen, wobei zwischen zwei benachbarten Ventilen der Durchfluss gezielt unterbrochen oder durchgeleitet werden kann. Dies ermöglicht eine hohe Flexibilität beim Aufbau und bei der Erweiterung des Versorgungssystems.

Ein Beispiel hierfür ist die Verschaltung des Modularventils V2 mit den Ventilen V3 und V4. In dieser Konfiguration wird das vom Festwasseranschluss 81 bereitgestellte Wasser zunächst über das Ventil V2 geführt. Von dort kann es - je nach Schaltzustand - auch über die Ventile V3 und V4 an die beiden weiteren Abnehmer 53, 54 weitergeleitet werden. Der modulare Aufbau gestattet es somit, das Wasser sowohl in den Mischbehälter T1 als auch direkt an separate Entnahmestellen - wie beispielsweise das Speibecken 53 oder weitere Spüleinrichten 54 - zu verteilen.

Ein besonderer Vorteil dieses modularen Ventilsystems liegt in seiner Erweiterbarkeit. Es besteht jederzeit die Möglichkeit, zusätzliche Modularventile - die in den Zeichnungen nicht dargestellt sind - zwischenzuschalten, ohne die grundsätzliche Struktur oder Funktionsweise des Systems zu verändern. Dies erlaubt eine anwendungsbezogene Anpassung der Einrichtung an unterschiedliche räumliche oder funktionale Anforderungen, ohne den hygienischen Aufbau oder die Systemlogik zu beeinträchtigen.

Bei der bislang beschriebenen Umsetzung des Systems kann sich jedoch das Problem ergeben, dass die allgemeine Trinkwasserversorgung 81 gestört ist und nicht genutzt werden kann. Dies kann beispielsweise dann der Fall sein, wenn das Trinkwasser generell verunreinigt ist oder aus anderen Gründen nicht zur Verfügung steht. In einem solchen Fall musste bisher manuell alternativ herangezogenes Wasser mit dem Entkeimungsmittel gemischt und über den Anschluss 12 für das Entkeimungsmittel zur Verfügung gestellt werden. Abgesehen davon, dass dies mit einem erhöhten Aufwand verbunden ist, besteht in einem solchen Fall auch die Gefahr, dass die Konzentration des Entkeimungsmittels nicht den gewünschten Anforderungen entspricht.

Gemäß der vorliegenden Erfindung ist deshalb vorgesehen, im Falle eines Ausfalls bzw. einer Unterbrechung der allgemeinen Trinkwasserversorgung auf über ein separates Reservoir 83 bereitgestelltes Wasser zurückzugreifen, um den kontinuierlichen Betrieb des Behandlungsplatzes 100 aufrechtzuerhalten. Entsprechend der erfindungsgemäßen Lösung ist daher für den Mischbehälter T1 ein dritter Anschluss 13 vorgesehen, der sich im Bereich der beiden weiteren Anschlüsse 11 und 12 bzw. Einlässe befindet und mit einem entsprechenden autarken Trinkwasserreservoir 83 verbunden ist. Es kann sich hierbei um einen Vorratsbehälter oder eine Flasche handeln, die mit dem Anschluss 13 gekoppelt und so positioniert ist, dass aufgrund des resultierenden hydrostatischen Drucks das Wasser selbstständig in den Mischbehälter T1 fließt - vorausgesetzt, eine Freigabe erfolgt durch das ebenfalls vorgesehene steuerbare Ventil V1.

Der dritte Anschluss 13 kann also im Bedarfsfall alternativ zum ersten Anschluss 11 genutzt werden, sodass der Mischbehälter T1 wahlweise entweder über die allgemeine Trinkwasserversorgung 81 oder über das autark genutzte separate Vorratsreservoir 83 befüllt wird. Entsprechende Steuermittel für die zugehörigen Ventile V1 und V2 sind dabei bevorzugt derart ausgestaltet, dass im Normalfall der allgemeine Trinkwasseranschluss 11 verwendet wird, im Falle einer Störung der allgemeinen Trinkwasserversorgung jedoch automatisch auf den zusätzlichen Anschluss 13 für die autarke Wasserversorgung umgeschaltet wird. Aus praktischen Gründen wird hierbei grundsätzlich immer nur einer der beiden Wasseranschlüsse 11, 13 genutzt. Wie bereits erwähnt, wird bei der Befüllung des Mischbehälters T1 mit Wasser stets auch eine vom Betriebszustand abhängige Menge des Entkeimungsmittels eingeleitet.

Die erfindungsgemäßen alternativen Vorgehensweisen zum Befüllen des Mischbehälters sind auch schematisch in den Figuren 3 und 4 dargestellt. Figur 3 zeigt den "Normalbetrieb", bei dem der Mischbehälter T1 über den Trinkwasseranschluss mithilfe des Ventils V2 befüllt wird und ergänzend das Entkeimungsmittel zugeführt wird. Figur 4 hingegen zeigt den "Notbetriebszustand", in dem aufgrund einer Störung der allgemeinen Trinkwasserversorgung die Befüllung des Mischbehälters T1 alternativ über das Ventil V1 und damit über den ergänzenden Vorratsbehälter 83 erfolgt.

Nachdem im Mischbehälter T1 die Flüssigkeiten dann in entsprechender Weise vermischt wurden, wird das resultierende aufbereitete Wasser - wie bereits beschrieben - in den ersten Vorratsbehälter T2 weitergeleitet, der als erstes Vorratsreservoir für das Behandlungsmedium dient und insbesondere der Versorgung der Instrumente 51 dient. Nach der Befüllung dieses Reservoirs T2 wird das zugehörige Ventil V10 geschlossen. Der Vorratsbehälter T2 kann unter Druck gesetzt werden, um das aufbereitete Wasser an den weiteren Vorratsbehälter T3 zu übergeben, über den dann die eigentliche Versorgung der Entnahmestellen 51 und 52 erfolgt.

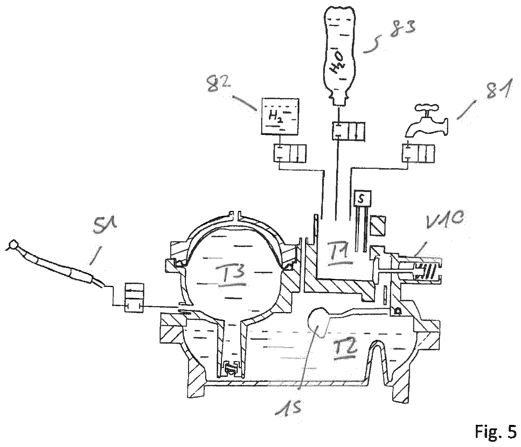

Figur 5 zeigt dabei den Zustand der erfindungsgemäßen Versorgungseinrichtung, in dem der maximale Füllstand des ersten Vorratsbehälters T2 erreicht ist und die Flüssigkeitszufuhr aus dem Mischbehälter T1 unterbrochen wird. Ein entsprechender Füllstandsensor 15, der in Form eines Schwimmers ausgeführt ist, veranlasst in diesem Fall das Schließen des zwischen dem Mischbehälter T1 und dem ersten Vorratsbehälter T2 vorgesehenen Selektivventils V10.

Das Hinzufügen des Entkeimungsmittels im Mischbehälter T1 dient - wie bereits erwähnt - auch dazu, nach Abschluss von Behandlungen bzw. Untersuchungen das gesamte Fluidsystem des Arbeitsplatzes 100 zu reinigen und zu entkeimen. Dies gilt insbesondere auch für die inneren Oberflächen des Mischbehälters T1, die frei von Keimen, Pilzen und anderen Verunreinigungen gehalten werden müssen. Systembedingt darf das mit Entkeimungsmittel versetzte Wasser jedoch nur bis zu einer bestimmten Höhe im Mischbehälter ansteigen, um die bereits erwähnten Freifallstrecken dauerhaft aufrechterhalten zu können.

Entsprechend den Darstellungen in den Figuren ist daher vorgesehen, dass der Mischbehälter einen seitlichen Überlauf 20 aufweist. Mithilfe eines weiteren Sensors S, über den der Füllstand im Mischbehälter T1 ermittelt wird und der mit den Steuerungsmitteln zum Ansteuern der verschiedenen Ventile gekoppelt ist, wird sichergestellt, dass das mit dem Entkeimungsmittel versetzte Wasser nur bis zum Niveau des Überlaufs 20 bzw. knapp unterhalb davon ansteigt. Bis zu diesem Niveau erstreckt sich derjenige Bereich, in dem die zugeführten Flüssigkeiten vermischt werden und der im Folgenden als Mischbereich M bezeichnet wird. Der Überlauf 20 selbst stellt eine ergänzende Sicherungsmaßnahme dar, die bei einem Ausfall des Sensors S oder der zugehörigen Steuerung ein unkontrolliertes Ansteigen der im Mischbehälter T1 sich befindenden Flüssigkeit bis zu ein Anschlüssen 11 bis 13 verhindert.

Hierbei ergibt sich jedoch das Problem, dass die oberhalb des seitlichen Überlaufs 20 bzw. des vorgesehenen Maximalniveaus befindlichen Oberflächen des Mischbehälters T1 nicht mit dem Reinigungsmittel in Kontakt kommen können. Dadurch besteht die Gefahr, dass sich dort im oberen Innenbereich des Mischbehälters T1 Keime, Pilze oder sonstige Verunreinigungen ablagern. Dies stellt bei bislang bekannten Vorrichtungen ein nicht unerhebliches hygienisches Problem dar, da diese Innenflächen des Mischbehälters T1 nur mit großem Aufwand gereinigt werden können.

Gemäß einem weiteren, in Figur 6 dargestellten und in Figur 7vergrößert gezeigten erfindungsgemäßen Konzept ist deshalb vorgesehen, den Mischbehälter T1 zweiteilig auszuführen - mit einem topfartigen Gehäuseunterteil 31 sowie einem deckelartigen Gehäuseoberteil 32, die gemeinsam den Mischbehälter T1 bilden. Am Gehäuseoberteil 32 befinden sich die Anschlussstellen 11, 12, 13 für die zugeführten Flüssigkeiten sowie eine Halterung für die entsprechenden Komponenten des Füllstandsensors S. Wie in den Figuren 6 und 7 gezeigt, ist das Gehäuseoberteil 32 so gestaltet, dass es von oben teilweise eingreifend in das Gehäuseunterteil 31 eingesetzt wird.

Die Ausgestaltung beider Gehäuseteile 31, 32 ist dabei so gewählt, dass im zusammengefügten Zustand zumindest alle Innenwandbereiche des Mischbehälters T1, die sich oberhalb des Mischbereichs M befinden, ausschließlich durch das Gehäuseoberteil 32 gebildet werden. Die sich unterhalb des Überlaufniveaus befindlichen Innenwandbereiche sind hingegen überwiegend Bestandteil des Gehäuseunterteils 31. Dieses kann zwar entsprechend den Darstellungen über das Niveau des Überlaufs 20 hinausragen, liegt in diesem Bereich jedoch ausschließlich an der Außenseite des Gehäuseoberteils 32 an, sodass diese Wände keine Innenflächen des Mischbehälters T1 darstellen.

Das erfindungsgemäße Konzept hat zur Folge, dass alle relevanten Innenwandbereiche des Gehäuseunterteils 31 - welches üblicherweise fest oder nur schwer lösbar in der Einrichtung zur Wasserversorgung des medizinischen Arbeitsplatzes 100 verbaut ist - zuverlässig mit dem mit Entkeimungsmittel versetzten Wasser in Kontakt gelangen. Diese Flächen sind somit hinsichtlich eines Keimbefalls unkritisch, da sie durch ein entsprechendes Befüllen des Mischbehälters T1 jederzeit automatisch gereinigt werden können.

Die oberhalb des Mischbereichs M befindlichen Innenwandbereiche hingegen sind Teil des Gehäuseoberteils 32, welches lösbar vom Gehäuseunterteil 31 gestaltet ist. Dadurch besteht die Möglichkeit, dieses bei Bedarf einfach zu entnehmen. So kann eine Reinigung dieser Flächen unabhängig von der restlichen Einrichtung zur Wasserversorgung des medizinischen Arbeitsplatzes 100 erfolgen. Alternativ kann das Gehäuseoberteil 32 auch als Einwegkomponente ausgestaltet werden, die im Bedarfsfall durch ein neues, keimfreies Gehäuseteil ersetzt wird.

Im Vergleich zu aus dem Stand der Technik bekannten Lösungen ermöglicht diese Variante somit, alle Innenwandbereiche des Mischbehälters T1 in einfacher Weise keimfrei zu halten bzw. zu reinigen. Die hygienischen Anforderungen können dadurch wesentlich einfacher und sicherer eingehalten werden. Dabei ist hervorzuheben, dass dieses Konzept nicht zwingend mit der zuvor beschriebenen ergänzenden autarken Wasserversorgung kombiniert werden muss, sondern auch bei herkömmlichen Systemen zum Einsatz kommen kann - etwa bei solchen, die lediglich über einen einzigen Wasserversorgungsanschluss und einen zweiten Anschluss für das Entkeimungsmittel verfügen.

## Patentansprüche

1. Einrichtung zur Wasserversorgung eines medizinischen, insbesondere eines zahnmedizinischen Arbeitsplatzes (100),
aufweisend einen Mischbehälter (T1) zum Bereitstellen einer Flüssigkeit, die Entnahmestellen (51, 52) des medizinischen Arbeitsplatzes (100) zugeführt wird, wobei die Flüssigkeit durch Mischen von Wasser mit einem Pflege- oder Entkeimungsmittel erhalten wird,
wobei der Mischbehälter (T1) einen ersten Anschluss (11) für eine Wasserzuführung sowie einen zweiten Anschluss (12) für die Zuführung des Pflege- oder Entkeimungsmittels aufweist, und wobei beide Anschlüsse (11, 12) an einer Oberseite des Mischbehälters (T1) angeordnet und über eine Freifallstrecke (H) von einem zum Mischen des Wassers mit dem Pflege- oder Entkeimungsmittel vorgesehenen Mischbereich (M) des Mischbehälters (T1) getrennt sind,
**dadurch gekennzeichnet,**
**dass** der Mischbehälter (T1) zusätzlich einen weiteren Anschluss (13) für eine alternative Wasserzuführung aufweist, wobei der weitere Anschluss (13) ebenfalls über die Freifallstrecke (H) von dem Mischbereich (M) getrennt ist.

2. Einrichtung zur Wasserversorgung eines medizinischen, insbesondere eines zahnmedizinischen Arbeitsplatzes (100) nach Anspruch 1,
**dadurch gekennzeichnet,**
**dass** diese einen Wasservorratsbehälter (83) aufweist, der mit dem weiteren Anschluss (13) für die alternative Wasserzuführung verbunden ist, wobei der Wasservorratsbehälter (83) vorzugsweise oberhalb des weiteren Anschlusses (13) angeordnet ist, und
wobei besonders bevorzugt der erste Anschluss (11) für die Wasserzuführung mit einem Festwasseranschluss (81) verbunden ist.

3. Einrichtung zur Wasserversorgung eines medizinischen, insbesondere eines zahnmedizinischen Arbeitsplatzes (100) nach Anspruch 1 oder 2,
**dadurch gekennzeichnet,**
**dass** den drei Anschlüssen (11, 12, 13) jeweils ein steuerbares Ventil (V1, V2, V7) vorgeschaltet ist, über welches die Zuflussmenge der jeweiligen Flüssigkeit in den Mischbehälter (T1) steuerbar ist.

4. Einrichtung zur Wasserversorgung eines medizinischen, insbesondere eines zahnmedizinischen Arbeitsplatzes (100) nach Anspruch 3,
**dadurch gekennzeichnet,**
**dass** diese Steuerungsmittel für die Ventile (V1-V7) aufweist, wobei die Steuerungsmittel vorzugsweise dazu ausgebildet sind,
a) im Bedarfsfall die Einleitung von Wasser in den Mischbehälter (T1) entweder über den ersten Anschluss (11) für die Wasserzuführung oder über den weiteren Anschluss (13) für die alternative Wasserzuführung freizugeben; und
b) im Falle des Einleitens von Wasser in den Mischbehälter (T1) zusätzlich auch das Pflege- oder Entkeimungsmittel einzuleiten.

5. Einrichtung zur Wasserversorgung eines medizinischen, insbesondere eines zahnmedizinischen Arbeitsplatzes (100) nach Anspruch 4,
**dadurch gekennzeichnet,**
**dass** die Menge des eingeleiteten Pflege- oder Entkeimungsmittels über die Steuerungsmittel sowohl bei Einleitung von Wasser über den ersten Anschluss (11) als auch bei Einleitung von Wasser über den weiteren Anschluss (13) dosierbar ist, und diese Menge insbesondere von einem Betriebszustand des medizinischen Arbeitsplatzes (100) abhängig ist.

6. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** dem Mischbehälter (T1) ein Vorratsbehälter (T2) nachgeordnet ist, in den die durch den Mischbehälter (T1) bereitgestellte Flüssigkeit eingeleitet wird, wobei zwischen dem Mischbehälter (T1) und dem Vorratsbehälter (T2) vorzugsweise ein steuerbares Ventil (V10) angeordnet ist,
und wobei vorzugsweise dem Vorratsbehälter (T2) ein zweiter Vorratsbehälter (T3) nachgeordnet ist, der durch den ersten Vorratsbehälter (T2) gespeist wird und über den die Versorgung der Entnahmestellen (51, 52) erfolgt.

7. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** das dem ersten Anschluss (11) zugeführte Wasser getrennt von dem Mischbehälter (T1) zusätzlich weiteren Entnahmestellen (53, 54) des medizinischen Arbeitsplatzes (100) zuführbar ist,
wobei diese weiteren Entnahmestellen (53, 54) ebenfalls jeweils eine Freifallstrecke (H) für die Wasserentnahme aufweisen.

8. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** den Entnahmestellen (51-54) des medizinischen Arbeitsplatzes jeweils ein steuerbares Ventil vorgeschaltet ist.

9. Einrichtung zur Wasserversorgung eines medizinischen, insbesondere eines zahnmedizinischen Arbeitsplatzes (100) nach Anspruch 3 oder Anspruch 8,
**dadurch gekennzeichnet,**
**dass** wenigstens eines der steuerbaren Ventile (V1-V7) als modulares Ventil ausgebildet ist, so dass zwei zu einander benachbarte Ventile (V1-V7) derart miteinander koppelbar sind, dass die einem ersten Ventil zugeführte Flüssigkeit auch zu einem mit ihm gekoppelten Ventil abgezweigt wird.

10. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** der Mischbehälter (T1) ein den Mischbereich (M) bildendes Gehäuseunterteil (31) sowie ein den Mischbehälter (T1) schließendes Gehäuseoberteil (32) aufweist, welches die Anschlüsse (11, 12, 13) für die Wasserzuführungen sowie für das Pflege- oder Entkeimungsmittel aufweist, wobei das Gehäuseoberteil (32) von dem Gehäuseunterteil (31) separierbar ist, um eine getrennte Reinigung oder einen Austausch des Gehäuseoberteils (32) zu ermöglichen.

11. Einrichtung zur Wasserversorgung eines medizinischen, insbesondere eines zahnmedizinischen Arbeitsplatzes (100), aufweisend einen Mischbehälter (T1) zum Bereitstellen einer Flüssigkeit, die Entnahmestellen (51, 52) des medizinischen Arbeitsplatzes (100) zugeführt wird, wobei die Flüssigkeit durch Mischen von Wasser mit einem Pflege- oder Entkeimungsmittel erhalten wird,
wobei der Mischbehälter (T1) einen ersten Anschluss (11) für eine Wasserzuführung sowie einen zweiten Anschluss (12) für das Pflege- oder Entkeimungsmittel aufweist, und wobei beide Anschlüsse (11, 13) an einer Oberseite des Mischbehälters (T1) angeordnet und über eine Freifallstrecke (H) von einem zum Mischen des Wassers mit dem Pflege- oder Entkeimungsmittel vorgesehenen Mischbereich (M) des Mischbehälters (T1) getrennt sind,
**dadurch gekennzeichnet,**
**dass** der Mischbehälter (T1) ein den Mischbereich (M) bildendes Gehäuseunterteil (31) sowie ein den Mischbehälter (T1) schließendes Gehäuseoberteil (32) aufweist, welches die Anschlüsse (11, 13) für die Wasserzuführung sowie für das Pflege- oder Entkeimungsmittel aufweist, wobei das Gehäuseoberteil (32) von dem Gehäuseunterteil (31) separierbar ist, um eine getrennte Reinigung oder einen Austausch des Gehäuseoberteils (32) zu ermöglichen.

12. Einrichtung zur Wasserversorgung eines medizinischen, insbesondere eines zahnmedizinischen Arbeitsplatzes (100) nach Anspruch 10 oder 11,
**dadurch gekennzeichnet,**
**dass** sich das Gehäuseoberteil (32) derart bis zum Mischbereich (M) des Mischbehälters (T1) erstreckt, dass ein Innenwandbereich des Mischbehälters (T1) oberhalb des Mischbereichs (M) ausschließlich durch das Gehäuseoberteil (32) gebildet ist.

13. Einrichtung zur Wasserversorgung eines medizinischen, insbesondere eines zahnmedizinischen Arbeitsplatzes (100) nach Anspruch 12,
**dadurch gekennzeichnet,**
**dass** das Gehäuseunterteil (31) oberhalb des Mischbereichs (M) das Gehäuseoberteil (32) außenseitig umgreift.

14. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** der Mischbehälter (T1) einen Überlauf (20) aufweist, der die Oberseite des Mischbereichs (M) begrenzt.

15. Medizinischer, insbesondere zahnmedizinischer Arbeitsplatz (100) mit einer Einrichtung zur Wasserversorgung nach einem der vorherigen Ansprüche.

## Geänderte Patentansprüche

### Geänderte Patentansprüche gemäss Regel 137(2) EPÜ.

1. Einrichtung zur Wasserversorgung eines medizinischen, insbesondere eines zahnmedizinischen Arbeitsplatzes (100),
aufweisend einen Mischbehälter (T1) zum Bereitstellen einer Flüssigkeit, die Entnahmestellen (51, 52) des medizinischen Arbeitsplatzes (100) zugeführt wird, wobei die Flüssigkeit durch Mischen von Wasser mit einem Pflege- oder Entkeimungsmittel erhalten wird,
wobei der Mischbehälter (T1) einen ersten Anschluss (11) für eine Wasserzuführung sowie einen zweiten Anschluss (12) für die Zuführung des Pflege- oder Entkeimungsmittels aufweist, und wobei beide Anschlüsse (11, 12) an einer Oberseite des Mischbehälters (T1) angeordnet und über eine Freifallstrecke (H) von einem zum Mischen des Wassers mit dem Pflege- oder Entkeimungsmittel vorgesehenen Mischbereich (M) des Mischbehälters (T1) getrennt sind, **dadurch gekennzeichnet,**
**dass** der Mischbehälter (T1) zusätzlich einen weiteren Anschluss (13) für eine alternative Wasserzuführung aufweist, wobei der weitere Anschluss (13) ebenfalls über die Freifallstrecke (H) von dem Mischbereich (M) getrennt ist.

2. Einrichtung zur Wasserversorgung eines medizinischen, insbesondere eines zahnmedizinischen Arbeitsplatzes (100) nach Anspruch 1,
**dadurch gekennzeichnet,**
**dass** diese einen Wasservorratsbehälter (83) aufweist, der mit dem weiteren Anschluss (13) für die alternative Wasserzuführung verbunden ist, wobei der Wasservorratsbehälter (83) vorzugsweise oberhalb des weiteren Anschlusses (13) angeordnet ist, und
wobei besonders bevorzugt der erste Anschluss (11) für die Wasserzuführung mit einem Festwasseranschluss (81) verbunden ist.

3. Einrichtung zur Wasserversorgung eines medizinischen, insbesondere eines zahnmedizinischen Arbeitsplatzes (100) nach Anspruch 1 oder 2,
**dadurch gekennzeichnet,**
**dass** den drei Anschlüssen (11, 12, 13) jeweils ein steuerbares Ventil (V1, V2, V7) vorgeschaltet ist, über welches die Zuflussmenge der jeweiligen Flüssigkeit in den Mischbehälter (T1) steuerbar ist.

4. Einrichtung zur Wasserversorgung eines medizinischen, insbesondere eines zahnmedizinischen Arbeitsplatzes (100) nach Anspruch 3,
**dadurch gekennzeichnet,**
**dass** diese Steuerungsmittel für die Ventile (V1-V7) aufweist, wobei die Steuerungsmittel vorzugsweise dazu ausgebildet sind,
a) im Bedarfsfall die Einleitung von Wasser in den Mischbehälter (T1) entweder über den ersten Anschluss (11) für die Wasserzuführung oder über den weiteren Anschluss (13) für die alternative Wasserzuführung freizugeben; und
b) im Falle des Einleitens von Wasser in den Mischbehälter (T1) zusätzlich auch das Pflege- oder Entkeimungsmittel einzuleiten.

5. Einrichtung zur Wasserversorgung eines medizinischen, insbesondere eines zahnmedizinischen Arbeitsplatzes (100) nach Anspruch 4,
**dadurch gekennzeichnet,**
**dass** die Menge des eingeleiteten Pflege- oder Entkeimungsmittels über die Steuerungsmittel sowohl bei Einleitung von Wasser über den ersten Anschluss (11) als auch bei Einleitung von Wasser über den weiteren Anschluss (13) dosierbar ist, und diese Menge insbesondere von einem Betriebszustand des medizinischen Arbeitsplatzes (100) abhängig ist.

6. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** dem Mischbehälter (T1) ein Vorratsbehälter (T2) nachgeordnet ist, in den die durch den Mischbehälter (T1) bereitgestellte Flüssigkeit eingeleitet wird, wobei zwischen dem Mischbehälter (T1) und dem Vorratsbehälter (T2) vorzugsweise ein steuerbares Ventil (V10) angeordnet ist,
und wobei vorzugsweise dem Vorratsbehälter (T2) ein zweiter Vorratsbehälter (T3) nachgeordnet ist, der durch den ersten Vorratsbehälter (T2) gespeist wird und über den die Versorgung der Entnahmestellen (51, 52) erfolgt.

7. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** das dem ersten Anschluss (11) zugeführte Wasser getrennt von dem Mischbehälter (T1) zusätzlich weiteren Entnahmestellen (53, 54) des medizinischen Arbeitsplatzes (100) zuführbar ist,
wobei diese weiteren Entnahmestellen (53, 54) ebenfalls jeweils eine Freifallstrecke (H) für die Wasserentnahme aufweisen.

8. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** den Entnahmestellen (51-54) des medizinischen Arbeitsplatzes jeweils ein steuerbares Ventil vorgeschaltet ist.

9. Einrichtung zur Wasserversorgung eines medizinischen, insbesondere eines zahnmedizinischen Arbeitsplatzes (100) nach Anspruch 3 oder Anspruch 8,
**dadurch gekennzeichnet,**
**dass** wenigstens eines der steuerbaren Ventile (V1-V7) als modulares Ventil ausgebildet ist, so dass zwei zu einander benachbarte Ventile (V1-V7) derart miteinander koppelbar sind, dass die einem ersten Ventil zugeführte Flüssigkeit auch zu einem mit ihm gekoppelten Ventil abgezweigt wird.

10. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** der Mischbehälter (T1) ein den Mischbereich (M) bildendes Gehäuseunterteil (31) sowie ein den Mischbehälter (T1) schließendes Gehäuseoberteil (32) aufweist, welches die Anschlüsse (11, 12, 13) für die Wasserzuführungen sowie für das Pflege- oder Entkeimungsmittel aufweist, wobei das Gehäuseoberteil (32) von dem Gehäuseunterteil (31) separierbar ist, um eine getrennte Reinigung oder einen Austausch des Gehäuseoberteils (32) zu ermöglichen.

11. Einrichtung zur Wasserversorgung eines medizinischen, insbesondere eines zahnmedizinischen Arbeitsplatzes (100) nach Anspruch 10,
**dadurch gekennzeichnet,**
**dass** sich das Gehäuseoberteil (32) derart bis zum Mischbereich (M) des Mischbehälters (T1) erstreckt, dass ein Innenwandbereich des Mischbehälters (T1) oberhalb des Mischbereichs (M) ausschließlich durch das Gehäuseoberteil (32) gebildet ist.

12. Einrichtung zur Wasserversorgung eines medizinischen, insbesondere eines zahnmedizinischen Arbeitsplatzes (100) nach Anspruch 11,
**dadurch gekennzeichnet,**
**dass** das Gehäuseunterteil (31) oberhalb des Mischbereichs (M) das Gehäuseoberteil (32) außenseitig umgreift.

13. Einrichtung zur Wasserversorgung eines medizinischen, insbesondere eines zahnmedizinischen Arbeitsplatzes (100) nach einem der vorherigen Ansprüche,
**dadurch gekennzeichnet,**
**dass** der Mischbehälter (T1) einen Überlauf (20) aufweist, der die Oberseite des Mischbereichs (M) begrenzt.

14. Medizinischer, insbesondere zahnmedizinischer Arbeitsplatz (100) mit einer Einrichtung zur Wasserversorgung nach einem der vorherigen Ansprüche.
